Europäisches Patentamt

European Patent Office

Office européen des brevets

(11) Veröffentlichungsnummer : **0 305 717 B1**

# (12) EUROPÄISCHE PATENTSCHRIFT

(45) Veröffentlichungstag der Patentschrift :
25.09.91 Patentblatt 91/39

(21) Anmeldenummer : 88111654.5

(22) Anmeldetag : 20.07.88

(51) Int. Cl.⁵ : **F02B 37/10, F02B 39/04,
F02B 33/36**

---

(54) **Aufladeeinheit.**

---

(30) Priorität : 04.09.87 DE 3729583
05.12.87 DE 3741286

(43) Veröffentlichungstag der Anmeldung :
08.03.89 Patentblatt 89/10

(45) Bekanntmachung des Hinweises auf die
Patenterteilung :
25.09.91 Patentblatt 91/39

(84) Benannte Vertragsstaaten :
CH DE FR GB IT LI NL

(56) Entgegenhaltungen :
EP-A- 0 222 082

(56) Entgegenhaltungen :
WO-A-80/00169
DE-A- 3 124 668
FR-A- 571 224
GB-A- 2 080 432

(73) Patentinhaber : MAN Gutehoffnungshütte
Aktiengesellschaft
Bahnhofstrasse 66 Postfach 11 02 40
W-4200 Oberhausen 11 (DE)

(72) Erfinder : Buthmann, Peter, Dr.-Ing.
Am Wildgatter 35
W-4650 Gelsenkirchen (DE)
Erfinder : Kotzur, Joachim, Dr.-Ing.
Holtkampstrasse 18
W-4200 Oberhausen 11 (DE)

EP 0 305 717 B1

EP 0 305 717 B1

## Beschreibung

Die Erfindung betrifft eine Aufladeeinheit mit einem mehrwelligen Verdrängerverdichter zur Aufladung von Verbrennungsmotoren, wobei die Abgasturbine mit einem Verdrängerverdichter, der von einem Verbrennungsmotor angetrieben wird, gekoppelt ist.

Die Abgasturboaufladung von Verbrennungsmotoren sowie die Aufladung mit Kompressoren, die nach dem Verdrängerprinzip arbeiten, ist heute Stand der Technik.

Aus der GB-A-2080432 ist eine Aufladeeinheit für einen Vierzylinder-Dieselmotor, der über eine Differential-Getriebe-Einheit einen Rotationsverdichter treibt, bekannt. Die Abgasturbine ist über einen Planetenrad-Träger mit nachgeschaltetem Getriebe mit dem Dieselmotor verbunden.

Die WO-A-8000169 zeigt ebenfalls einen Fahrzeug-Dieselmotor, der durch eine Transmissions-Einheit sowohl mit einem Schraubenkompressor als auch mit einer Abgasturbine verbunden ist.

Bei beiden Ausführungsbeispielen erfolgt die Ladung der Turbine und damit die zusätzliche Energieausnutzung bei entsprechenden Drehzahlen über zwischengeschaltete, jedoch inzwischen technisch überholte Kraftübertragungs-Vorrichtungen.

Im allgemeinen weisen Abgasturbolader (ATL), mechanisch angetriebene Turbolader (TL) sowie Kompressoren, die nach dem Verdrängerprinzip z.B. als Abgasschraubenlader (ASL) oder Schraubenlader (SL) arbeiten und zum Stand der Technik zu rechnen sind, einige Nachteile auf :

Beim ATL und TL

— sind zur Erzielung des erforderlichen Druckverhältnisses hohe Umfangsgeschwindigkeiten notwendig. Beim Anfahren des Motors ist dadurch die Aufladewirkung sehr gering ("Turboloch")

— werden bei kleineren Verbrennungsmotorleistungen nur mäßige Wirkungsgrade, vor allem in Teillastbetrieb, erzielt

— ist die Betriebsgrenze durch die Pumpgrenze des Kompressors gegeben

— wirkt sich die mit der Drehzahl steil ansteigende Betriebskennlinie ungünstig auf das Drehmomentverhalten des Verbrennungsmotors aus, was nur mit aufwendigen Maßnahmen (Abblasen von Abgasen oder Ladeluft, Ladedruckregelung) verbessert werden kann.

Als Vorteil steht dem gegenüber, daß der Abgasturbolader die gesamte zur Verdichtung der Ladeluft notwendige Energie dem Abgasstrom entnimmt.

Die Vorteile des Verdrängerverdichters bestehen darin, daß

— dieser auch bei niedrigen Drehzahlen ein hohes Druckverhältnis für die Aufladung aufweist,

— dieser keine Pumpgrenze hat,

— dieser hohe Teillastwirkungsgrade und eine mit der Motordrehzahl flach verlaufende Betriebskennlinie aufweist und

— dieser auch bei kleinen Motorleistungen hohe Wirkungsgrade erreicht.

Der Nachteil des Verdrängerverdichters besteht darin, daß die zum Antrieb des Verdichters notwendige Leistung im gesamten Betriebsbereich dem Verbrennungsmotor entnommen werden muß (mechanische Kopplung mit dem Motor).

Diesem Nachteil wird z.B. beim Schraubenlader dadurch begegnet, daß durch einen Schraubenexpander (-motor) ein Teil der Abgasenergie zurückgewonnen und dem Schraubenlader über die mechanische Kopplung wieder zugeführt wird. Der Nachteil dieses Abgasschraubenladers besteht jedoch darin, daß

— der Schraubenexpander ein relativ großes Bauvolumen hat,

— kleine Spiele bei niedrigen und hohen Abgastemperaturen erhalten bleiben müssen,

— der Schraubenexpander nur mit relativ hohem Fertigungsaufwand herzustellen ist.

Es ist Aufgabe der Erfindung, eine Aufladeeinheit zu schaffen, die einerseits die Vorteile des Verdrängerverdichters als Lader sowie die Vorteile von Abgasturbinen ausnutzt, deren obengenannten Nachteile jedoch vermeidet.

Bei Kombination dieser Aufladeeinheit mit dem Verbrennungsmotor wird ein hohes Anfahrdrehmoment bei gleichzeitig optimaler Brennstoffausnutzung des Verbrennungsmotors realisiert.

Hierbei wird die Abgasenergie des Verbrennungsmotors in einer Abgasturbine ausgenutzt und an den Verdrängerverdichter abgegeben, der außerdem mit dem Verbrennungsmotor mechanisch gekoppelt ist. Beim Anfahren des Verbrennungsmotors wird bereits vom Verdrängerverdichter unter Aufnahme der Leistung $P_L$, ein hoher Ladedruck aufgebaut, während die Abgasturbine, die nach dem dynamischen Prinzip arbeitet, nur eine sehr geringe Leistung ($P_T$) abgibt.

Die für die Verdichtung im Verdrängerverdichter fehlende Leisung ($P_L-P_T$) wird vom Verbrennungsmotor über den Antriebszapfen an den Verdrängerverdichter übertragen. Mit wachsender Drehzahl steigt der Leistungsanteil ($P_T$) der Abgasturbine. Bei hohen Drehzahlen kann die Abgasturbine mehr Leistung abgeben, als der Verdrängerverdichter benötigt. Die überschüssige Leistung wird dann mechanisch über einen Rotor des

2

Verdrängerverdichters an den Verbrennungsmotor übertragen.

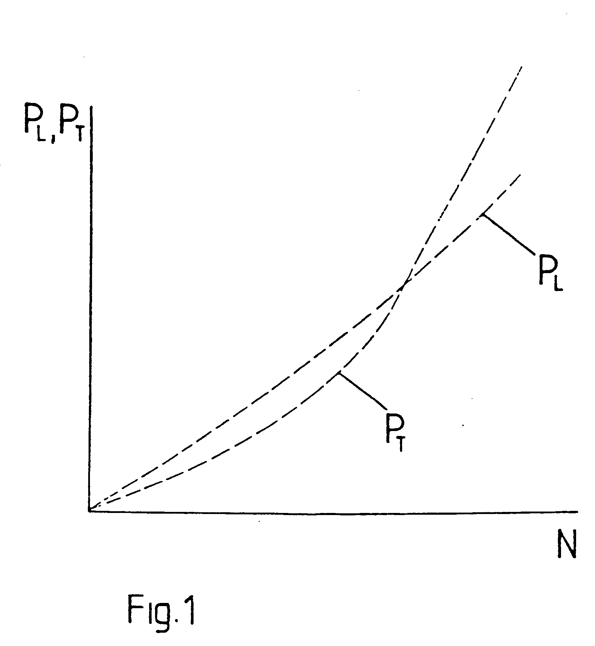

Die Figur 1 zeigt den qualitativen Verlauf der Leistungsaufnahme $P_L$ eines Verdrängerverdichters und der Leistungsabgabe $P_T$ einer Abgasturbine in Abhängigkeit von der Drehzahl N. Ab dem Schnittpunkt von $P_L$ — der Leistungsaufnahme des Verdrängerverdichters — mit $P_T$ — der Leistungsabgabe der Abgasturbine — wird eine zusätzliche Leistungsabgabe der Abgasturbine an den Verbrennungsmotor über den Verdrängerverdichter erreicht.

Die eingangs gestellte Aufgabe wird nach der Erfindung in der Weise gelöst, wie es die Patentansprüche angeben.

Zur Erzielung einer optimalen Drehzahl der Abgasturbine ist es zweckmäßig, ein Getriebe zwischen Verdrängerverdichter und Abgasturbine vorzusehen.

Eine besonders kompakte Bauweise wird erzielt, wenn das Übersetzungsgetriebe zwischen dem Verdrängerverdichter und der Abgasturbine auf der gleichen Seite wie das Synchronisationsgetriebe des Verdrängerverdichters angeordnet ist.

Zur optimalen Anpassung des Verdrängerverdichters an den Verbrennungsmotor wird ein Getriebe zwischen Verbrennungsmotor und Verdrängerverdichter erforderlich.

Es ist vorteilhaft, den Verdrängerverdichter als Schraubenlader auszuführen, da diese Bauform hohe Drehzahlen erlaubt. Hohe Drehzahlen ergeben sich im allgemeinen auch bei den Abgasturbinen, so daß bei der Kopplung mit dem Verdrängerverdichter niedrige Übersetzungsverhältnisse auftreten, die meist einstufige Getriebe ermöglichen. In den meisten Fällen ist es zweckmäßig, den Verdrängerverdichter über den Hauptrotor anzutreiben, insbesondere wenn dieser den größeren Leistungsbedarf hat.

Die Abgasturbine kann je nach Volumenstrom und Druck der Abgase des Verbrennungsmotors als Radial- oder Axialturbine ausgeführt werden.

Ausführungsbeispiele der erfindungsgemäßen Aufladeeinheit werden nachstehend anhand von den nachfolgenden Zeichnungen erläutert.

Es zeigen :

Fig. 2    eine schematische Darstellung der Aufladeeinheit,
Fig. 3    eine konstruktive Ausführung von Fig. 2.
Fig. 4    eine weitere konstruktive Auführung.

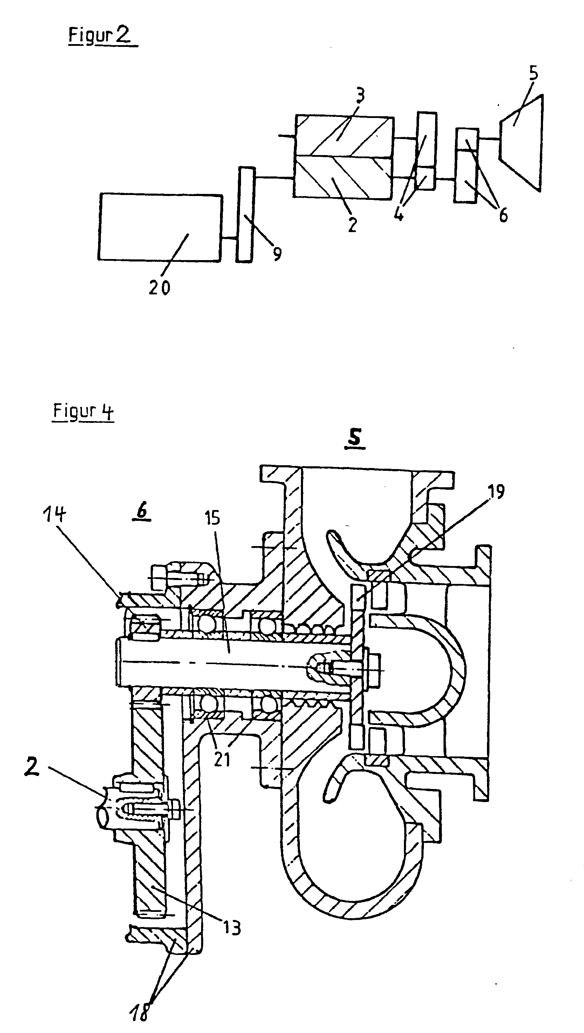

Figur 2 zeigt eine schematische Darstellung einer Aufladeeinheit mit Anordnung von Verbrennungsmotor (20) und Verdrängerverdichter (2, 3) sowie von Synchronisations- (4) und Übersetzungsgetriebe (6) auf der Seite der Abgasturbine (5).

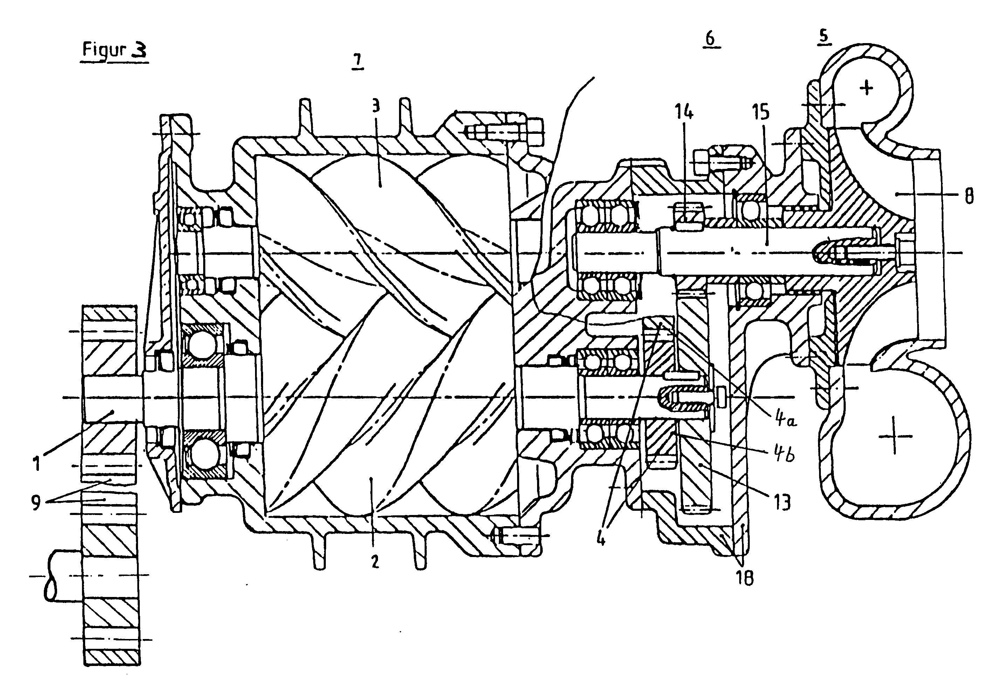

Bei der in Figur 3 dargestellten Anordnung der Aufladeeinheit besteht zwischen dem Wellenzapfen (1) des Verdrängerverdichters (7) und dem Verbrennungsmotor eine Verbindung, hier als Riementrieb (9). Der Nebenrotor (3) des Verdrängerverdichters (7) wird vom Hauptrotor (2) über ein Synchronisationsgetriebe (4) angetrieben, das direkt über ein Übersetzungsgetriebe (6) mit der Abgasturbine (5) gekoppelt ist. Auf diese Weise wird die von der Abgasturbine (5) abgegebene Leistung über die beiden Getriebe (4 u. 6) an den Hauptrotor (2) des Verdrängerverdichters (7) übertragen. Die über den Wellenzapfen (1) vom Verbrennungsmotor entnommene Leistung reduziert sich dabei um diesen Betrag.

Die hier dargestellte Turbine ist als Radialturbine (5) ausgeführt, wobei deren Laufrad (8) fliegend auf der Getriebewelle (15) angeordnet ist.

Sämtliche Lager der Aufladeeinheit sind hier als Wälzlager gezeichnet, können aber auch als Gleitlager ausgeführt werden.

Ferner sind ein Zahnrad (4b) des Synchronisationsgetriebes (4) und das Zahnrad (13) des Übersetzungsgetriebes (6) fliegend nebeneinander auf der Welle des Hauptrotors (2) angeordnet.

Das zweite Zahnrad (4a) des Synchronisationsgetriebes (4) ist auf der Welle des Nebenrotors (3) auf der Seite zur Abgasturbine angeordnet. Dieses Zahnrad und das Wellenende des Nebenrotors (3) sind aus der Darstellung nicht ersichtlich, da die Abgasturbine (5) mit ihrer Lagerung zur besseren Darstellung in die gemeinsame Ebene der Achsen des Haupt- (2) und Nebenrotors (3) gedreht worden ist.

Das Zahnrad (14) des Übersetzungsgetriebes ist auf der Welle (15) der Abgasturbine gelagert. Das gemeinsame Getriebegehäuse (18) des Synchronisations- (4) und Übersetzungsgetriebes (6) ist zwischen die Gehäuse von Verdrängerverdichter (7) und Abgasturbine (5) geflanscht.

In Fig. 4 ist bei offen dargestelltem Gehäuse (18) das Zahnrad (13) des Übersetzungsgetriebes (6) fliegend auf der gemeinsamen Welle des Hauptrotors (2) und des Synchronisationsgetriebes (4), das Zahnrad (14) fliegend auf der Welle (15) der Abgasturbine (5) angeordnet. Die Abgasturbine (5) ist hierbei als Axialturbine ausgeführt, wobei deren Laufrad (19) ebenfalls fliegend an dem dem Zahnrad (14) des Übersetzungsgetriebes (6) gegenüberliegenden Ende der Welle (15) angeordnet ist, die zwischen Zahnrad (14) und Laufrad (19) in den

EP 0 305 717 B1

Lagern (21) läuft.

Bezugziffernliste :

1 Wellenzapfen des Verdrängerverdichters zur Kupplung mit dem Verbrennungsmotor
2 Hauptrotor des Verdrängerverdichters (Schraubenlader)
3 Nebenrotor des Verdrängerverdichters (Schraubenlader)
4 Synchronisationsgetriebe zwischen Haupt- und Nebenrotor (2, 3) des Verdrängerverdichters
4a Zahnrad auf Welle 3
4b Zahnrad auf Welle 2
5 Abgasturbine (Radial- oder Axial-Turbine)
6 Übersetzungsgetriebe zwischen Verdrängerverdichter und Abgasturbine
7 Verdrängerverdichter (Schraubenlader)
8 Laufrad der Radialturbine
9 Getriebe zwischen Verdrängerverdichter und Verbrennungsmotor
10 Gehäuse des Übersetzungsgetriebes
11 Gehäuse des Verdrängerverdichters
12 Gehäuse der Abgasturbine
13 Zahnrad des Übersetzungsgetriebes, koaxial zum Hauptrotor
14 Zahnrad des Übersetzungsgetriebes, koaxial zur Abgasturbine
15 Welle der Abgasturbine
16 Lager der Welle der Abgasturbine
17 Lager der Welle der Abgasturbine
18 Gemeinsames Gehäuse des Synchronisationsgetriebes des Verdrängerverdichters und des Übersetzungsgetriebes
19 Laufrad der Axialturbine
20 Verbrennungsmotor
21 Lager bei fliegender Lagerung des Zahnrades des Übersetzungsgetriebes

## Patentansprüche

1. Aufladeeinheit mit einem mehrwelligen Verdrängerverdichter zur Aufladung von Verbrennungsmotoren, wobei eine Abgasturbine mit einem Verdrängerverdichter, der von einem Verbrennungsmotor angetrieben wird, gekoppelt ist, dadurch gekennzeichnet, daß ein Synchronisationsgetriebe (4) zwischen Haupt- und Nebenrotor (2, 3) des Verdrängerverdichters (7) und ein Übersetzungsgetriebe (6) zwischen Verdrängerverdichter (7) und Abgasturbine (5) auf einer Seite des Verdrängerverdichters (7) in einem gemeinsamen Gehäuse (18) angeordnet sind.

2. Aufladeeinheit nach Anspruch 1, dadurch gekennzeichnet, daß ein Zahnrad (4a) des Synchronisationsgetriebes (4) zwischen Haupt- und Nebenrotor (2, 3) des Verdrängerverdichters (7) und ein Zahnrad (13) des Übersetzungsgetriebes (6) zwischen Abgasturbine (5) und Verdrängerverdichter (7) gemeinsam auf einer Welle angeordnet sind.

3. Aufladeeinheit nach den Ansprüchen 1 und 2, dadurch gekennzeichnet, daß die gemeinsam auf einer Welle angeordneten Zahnräder (4a, 13) fliegend auf der Welle eines Rotors (2 bzw. 3) des Verdrängerverdichters (7) angeordnet sind.

4. Aufladeeinheit nach den Ansprüchen 1 bis 3, dadurch gekennzeichnet, daß das Zahnrad (14) des Übersetzungsgetriebes (6) zwischen Verdrängerverdichter (7) und der Abgasturbine (5) fliegend an dem Ende der Welle (15) der Abgasturbine (5) angeordnet ist.

## Claims

1. Supercharging unit with a multi-shaft displacement compressor for supercharging internal combustion engines, wherein an exhaust turbine is coupled to a displacement compressor which is driven by an internal combustion engine, characterised in that a synchromesh gear mechanism (4) between main and auxiliary rotors (2, 3) of the displacement compressor (7) and a speed reduction gear mechanism (6) between displacement compressor (7) and exhaust turbine (5) are arranged in a common housing (18) on one side of the displacement

4

compressor (7).

2. Supercharging unit according to claim 1, characterised in that a gear (4a) of the synchromesh gear mechanism (4) between main and auxiliary rotors (2, 3) of the displacement compressor (7) and a gear (13) of the speed reduction gear mechanism (6) between exhaust turbine (5) and displacement compressor (7) are arranged together on a shaft.

3. Supercharging unit according to claims 1 and 2, characterised in that the gears (4a, 13) arranged together on a shaft are arranged in fully floating relationship on the shaft of one rotor (2 or 3) of the displacement compressor (7).

4. Supercharging unit according to claims 1 to 3, characterised in that the gear (14) of the speed reduction gear mechanism (6) between displacement compressor (7) and exhaust turbine (5) is arranged in fully floating relationship at the end of the shaft (15) of the exhaust turbine (5).

## Revendications

1. Unité de suralimentation comprenant un compresseur volumétrique à plusieurs arbres pour alimenter des moteurs à combustion interne, une turbine à gaz d'échappement étant couplée à un compresseur volumétrique qui est entraîné par un moteur à combustion interne, caractérisée en ce qu'un réducteur de synchronisation (4) entre le rotor principal et le rotor secondaire (2, 3) du compresseur volumétrique (7) et un réducteur de transmission (6) entre le compresseur volumétrique (7) et la turbine à gaz (5) se trouvent dans un boîtier commun (18) sur un côté du compresseur volumétrique (7).

2. Unité de suralimentation selon la revendication 1, caractérisée en ce qu'on place un pignon (4a) du réducteur de synchronisation (4) entre le rotor principal et le rotor secondaire (2, 3) du compresseur volumétrique (7) et un pignon (13) du réducteur de transmission (6) entre la turbine à gaz d'échappement (5) et le compresseur volumétrique (7) sur un même arbre.

3. Unité de suralimentation selon les revendications 1 et 2, caractérisée en ce qu'on place les pignons (4a, 13) flottant sur l'arbre d'un rotor (2 ou 3) du compresseur volumétrique (7).

4. Unité de suralimentation selon les revendications 1 à 3, caractérisée en ce qu'on place le pignon (14) du réducteur de transmission (6) entre le compresseur volumétrique (7) et la turbine à gaz d'échappement (5) flottant à l'extrémité de l'arbre (15) de la turbine à gaz d'échappement (5).

Fig.1

Figur 2

Figur 4

**5**

**6**

Figur 3